# EUROPÄISCHE PATENTANMELDUNG

(11) **EP 4 389 397 A1**
(43) Veröffentlichungstag der Anmeldung: **26.06.2024**
(21) Anmeldenummer: 23215705.7
(22) Anmeldetag: 12.12.2023
(51) Int. Cl.: B29C 64/118, B29C 64/209, B29C 64/393, B33Y 10/00, B33Y 50/02

(54) **VERFAHREN UND VORRICHTUNG ZUM HERSTELLEN EINER WANDUNG EINES OBJEKTES**

(30) Priorität: 22.12.2022 DE 102022134523
(71) Anmelder: Ottobock SE & Co. KGaA, 37115 Duderstadt (DE)
(72) Erfinder: VIER, Leonard, 37115 Duderstadt (DE)
(74) Vertreter: Gramm, Lins & Partner Patent- und Rechtsanwälte PartGmbB

(57) **Zusammenfassung**

Ein Verfahren zum Herstellen wenigstens einer Wandung (8) eines 3-dimensionalen Objektes mittels eines additiven Fertigungsverfahrens, bei dem aus wenigstens einer Einbringöffnung (4) einer Einbringnadel (2) wenigstens ein Fertigungsmaterial in einem fließfähigen Zustand in ein Stützmaterial eingebracht wird und danach aushärtet, wobei die Wandung sich entlang eines Wandungsverlaufes erstreckt und eine erste Seitenfläche und eine gegenüberliegende zweite Seitenfläche aufweist, wobei die Einbringnadel entlang eines Druckpfades durch das Stützmaterial bewegt wird, wobei der Druckpfad (12) einem Verlaufspfad (10) entlang des Wandungsverlaufes entspricht, dem ein Texturierungspfad überlagert ist.

## Beschreibung

Die Erfindung betrifft ein Verfahren zum Herstellen wenigstens einer Wandung eines 3-dimensionalen Objektes mittels eines additiven Fertigungsverfahrens, bei dem aus wenigstens einer Einbringöffnung einer Einbringnadel wenigstens ein Fertigungsmaterial in einem fließfähigen Zustand in ein Stützmaterial eingebracht wird und danach ausgehärtet, wobei die Wandung sich entlang eines Wandungsverlaufes erstreckt und eine erste Seitenfläche und eine gegenüberliegende zweite Seitenfläche aufweist, wobei die Einbringnadel entlang eines Druckpfades durch das Stützmaterial bewegt wird. Die Erfindung betrifft zudem ein Verfahren zum Erstellen eines Druckpfades für ein solches Verfahren.

Additive Fertigungsverfahren sind heute in vielen Formen aus dem Stand der Technik bekannt und werden zur Herstellung sehr unterschiedlicher 3-dimensionale Objekte verwendet. Herkömmlicherweise sind additive Fertigungsverfahren zum Herstellen großer Stückzahlen der jeweiligen Objekte kaum geeignet, da die Herstellung einzelner Objekte viel Zeit in Anspruch nimmt. Bei additiven Fertigungsverfahren, insbesondere beim 3-D-Drucken, wird das herzustellende Objekt aus einer Vielzahl sehr dünner übereinander angeordneter Schichten aufgebaut, die oftmals nur einige Mikrometer dick sind. Die Herstellung insbesondere großer Objekte ist daher sehr zeitaufwendig.

In den vergangenen Jahren sind auf diesem Gebiet große Fortschritte erzielt worden. Beispielsweise wurde vom MIT ein 3-dimensionales Druckverfahren entwickelt, das in der US 2018/281295 A1 veröffentlicht wurde. Ein solches Verfahren wird als "Rapid Liquid Printing" (RLP)-Verfahren bezeichnet. Dabei wird das herzustellende Objekt in einem Behälter erzeugt, der eine Gelsuspension oder ein anderes Material als Stützmaterial beinhaltet, das mit dem Fertigungsmaterial nicht chemisch reagiert. Es dient ausschließlich zum Stützen des Fertigungsmaterials, solange dieses noch nicht ausreichend ausgehärtet ist. Unter "Aushärten" wird im Sinne der vorliegenden Erfindung auch ein Vernetzen oder ein anderer Vorgang verstanden, durch den das fließfähige Fertigungsmaterial in einen nicht fließfähigen Zustand übergeht. Bei dem Verfahren wird das Fertigungsmaterial im fließfähigen Zustand, beispielsweise flüssig oder gegenförmig, an der gewünschten Position in das Stützmaterial eingebracht. Dazu wird wenigstens eine Einbringnadel verwendet, die wenigstens eine Einbringöffnung aufweist.

Mit derartigen RLP-Verfahren werden heute beispielsweise Prothesenliner gedruckt, die als Zwischenschicht zwischen einem Amputationsstumpf und einem Prothesenschaft getragen werden, an dem weitere Prothesenelemente angeordnet sind. Der Prothesenliner wird direkt auf der Haut getragen, sodass die Haptik für das Tragegefühl von großer Bedeutung ist. Die der Haut zugewandte Seite muss folglich besonders ausgebildet sein, um für den Träger des Prothesenliners und der darüber angeordneten Prothese ein möglichst angenehmes Tragegefühl zu erreichen. Gleiches gilt jedoch auch für die gegenüberliegende der hautabgewandte Seite, da diese die Seite ist, die berührt und angefasst werden kann, wenn der Liner getragen wird. Zudem ist die Gestaltung dieser Außenseite des Liners ein Design- und damit ein Wiedererkennungsmerkmal.

Ein Liner verfügt über ein offenes proximales Ende, in das der Amputationsstumpf eingeführt wird. Er verfügt zudem über ein geschlossenes distales Ende, an dem sich in einigen Ausführungsformen ein Befestigungselement befindet, mit dem eine mechanische Verbindung zwischen dem distalen Ende des Liners und einem Prothesenschaft hergestellt werden kann. Ein solches Befestigungselement ist jedoch nicht für alle Ausführungsform notwendig. Es gibt daher auch Liner, die nicht über ein derartiges Befestigungselement verfügen. In diesem Fall wird oft der nötige Halt zwischen dem über den Amputationsstumpf gezogenen Liner und dem Prothesenschaft dadurch erreicht, dass zwischen dem Liner und dem Prothesenschaft ein Unterdruck erzeugt wird. Die Richtung, die sich vom distalen Ende zum proximalen Ende oder umgekehrt erstreckt, wird als Längsrichtung des Liners bezeichnet.

Der Liner verfügt über eine Wandung, die in diesem Fall die Wandung des 3-dimensionalen Objektes bildet. Die erste Seitenfläche und die zweite Seitenfläche werden dann durch die Innenseite und die Außenseite des Liners gebildet, wobei die Innenseite des Liners die Seite ist, die im getragenen Zustand mit der Haut des Trägers in Kontakt kommt. Die Außenseite des Liners ist die der Innenseite gegenüberliegende Seite. Ob die Innenseite die erste Seitenfläche oder die zweite Seitenfläche bildet, ist für die Funktion der vorliegenden Erfindung unerheblich. Wichtig ist lediglich, dass die Außenseite die jemals andere Seitenfläche bildet.

Die Wandung des Liners erstreckt sich entlang eines Wandungsverlaufes. Dieser entspricht der Querschnittskontur des Liners. Viele Standardliner haben einen kreisförmigen Querschnitt, wobei der Durchmesser dieses Kreises vom distalen Ende zum proximalen Ende hin zunimmt. In diesem Fall erstreckt sich die Wandung entlang dieses Kreises, sodass dieser den Wandungsverlauf bildet. Der Wandungsverlauf muss jedoch nicht kreisförmig ausgebildet sein. Er kann auch oval, ellipsoid oder frei gestaltet sein. Er kann zudem an verschiedenen Stellen entlang der Längsrichtung des Liners unterschiedlich ausgebildet sein. Bei einem additiven Fertigungsverfahren, wie beispielsweise dem RLP-Verfahren, wird das Fertigungsmaterial durch wenigstens eine Einbringöffnung der Einbringnadel in das Stützmaterial eingebracht. Dabei wird die Menge des Fertigungsmaterials, die eingebracht wird, so dosiert und auf die Geschwindigkeit, mit der sich die Einbringnadel entlang des Druckpfades bewegt, abgestimmt, dass die Breite des eingebrachten Stranges aus Fertigungsmaterial der Breite der Wandung entspricht. Der Druckpfad entspricht somit dem Wandungsverlauf.

Nachteilig ist, dass weder die erste Seitenfläche noch die zweite Seitenfläche der Wandung, die durch das RLP-Verfahren hergestellt wird, mit einer Struktur oder einer Texturierung versehen werden kann. Aus der DE 10 2020 118 034 A1 ist eine Vorrichtung bekannt, die zum Durchführen eines RLP-Verfahrens verwendet werden kann, wobei die verwendete Einbringnadel im Bereich der Einbringöffnung über ein Werkzeug verfügt, mit dem wenigstens eine Seitenfläche der herzustellenden Wandung bearbeitet werden kann. Dabei geht es jedoch in der Regel darum, die jeweilige Seitenfläche zu glätten und/oder eine Haftung zwischen einer aktuellen Lage des eingebrachten Fertigungsmaterials und einer zuvor eingebrachten Lage zu verbessern.

Der Erfindung liegt daher die Aufgabe zugrunde, ein Verfahren so weiterzuentwickeln, dass die Nachteile aus dem Stand der Technik überwunden oder zumindest abgeschwächt werden.

Die Erfindung löst die gestellte Aufgabe durch ein Verfahren gemäß dem Oberbegriff des Anspruchs 1, das sich dadurch auszeichnet, dass der Druckpfad einem Verlaufspfad entlang des Wandungsverlaufes entspricht, dem ein Texturierungspfad überlagert ist. Anders als im Stand der Technik wird die Einbringnadel folglich nicht lediglich entlang dem Verlaufspfad durch das Stützmaterial bewegt, der dem Wandungsverlauf entspricht. Vielmehr wird ein Texturierungspfad überlagert. Dies bedeutet, dass sich die Richtung, in der die wenigstens eine Einbringnadel entlang des Druckpfades bewegt wird, nicht immer identisch ist zur Richtung des Wandungsverlaufes. Der Texturierungspfad kann daher auch als Abweichung des Druckpfades von dem Verlaufspfad, also von dem Wandungsverlauf angesehen werden. Der Texturierungspfad kann dabei nur einen oder mehrere Abschnitte des Druckpfades betreffen, sodass entlang der anderen Abschnitte der Druckpfad dem Verlaufspfad entspricht. Vorzugsweise betrifft der Texturierungspfad jedoch nicht nur einen oder mehrere Abschnitte, sondern den gesamten Druckpfad.

Vorteilhafterweise erstreckt sich der Verlaufspfad in der Mitte zwischen der ersten Seitenfläche und der zweiten Seitenfläche. Bei einem additiven Fertigungsverfahren wie beispielsweise einem RLP-Verfahren wird die herzustellende Wandung in mehreren Lagen hergestellt. Der aus der wenigstens einen Einbringöffnung austretende und in das Stützmaterial eingebrachte Strang aus Fertigungsmaterial wird folglich in mehreren Lagen übereinander angeordnet. Mit jeder Lage wächst die herzustellende Wandung folglich um den Durchmesser dieser Lage an. Ist das 3-dimensionale Objekt beispielsweise ein Prothesenliner, verläuft der Verlaufspfad spiralförmig vom distalen Ende des Prothesenliners hin zum offenen proximalen Ende. Mit jeder Lage, in diesem Beispiel also mit jeder Windung der Spirale des spiralförmigen Verlaufspfades, wächst folglich nicht nur die Wandung, sondern damit auch deren erste Seitenfläche und die gegenüberliegende zweite Seitenfläche. Der Verlaufspfad verläuft dabei vorzugsweise in der Mitte zwischen der Position der beiden Seitenflächen der Wandung an der Stelle der Wandung, die durch die jeweilige Lage hergestellt werden soll. Dies kann, muss jedoch nicht auch die Mitte der vorherigen Lage sein. Insbesondere für den Fall, dass die Wandung einen Neigung aufweist, weil sich beispielsweise der Umfang eines herzustellen Objektes, beispielsweise eines Liners, verändert, insbesondere sich vergrößert, liegt der Verlaufspfad für die aktuellen Lage des einzubringenden Stranges aus Fertigungsmaterial nicht in der Mitte der vorherigen Lage, sondern ist aus dieser Mitte herausversetzt.

Vorzugsweise ist der Verlaufspfad spiralförmig. Besonders bevorzugt hat die herzustellende Wandung einen geschlossenen Querschnitt, der beispielsweise kreisförmig, oval, ellipsoid oder freigeformt ausgebildet ist. Er lässt sich bevorzugt durch Parameter wie beispielsweise einen Radius, einen Durchmesser und/oder einen Krümmungsradius parametrisieren.

Vorzugsweise beinhaltet der Texturierungspfad wenigstens eine Schwingung oder besteht aus wenigstens einer solchen Schwingung. Die Schwingung ist vorzugsweise eine Sinusschwingung, eine Dreiecksschwingung oder eine Rechteckschwingung. Die Schwingung lässt sich vorzugsweise durch eine Wellenlänge und eine Amplitude parametrisieren. Weist der Texturierungspfad wenigstens eine Schwingung auf, bedeutet dies, dass der Druckpfad abwechselnd zu beiden Seiten vom Verlaufspfad abweicht. Die Einbringnadel weicht daher abwechselnd nach links und rechts in Bewegungsrichtung der Einbringnadel entlang des Druckpfades gesehen, vom Verlaufspfad und damit vom eigentlichen Wandungsverlauf ab. Eine Dreiecksschwingung oder eine Rechteckschwingung wird dabei gekennzeichnet durch die geometrische Form dieser Abweichung. Bei einer Dreiecksschwingung bewegt sich die Einbringnadel zunächst linear in eine Richtung von dem Verlaufspfad weg, beschreibt dann eine enge Kurve, die auch als Knick oder Ecke bezeichnet werden kann, und bewegt sich dann wieder linear auf den Verlaufspfad zu. Bei einer Rechteckschwingung bewegt sich die Einbringnadel zunächst in einem rechten Winkel vom Verlaufspfad weg, bewegt sich dann über eine vorgegebene Strecke hinweg parallel zum Verlaufspfad und verläuft dann wieder im rechten Winkel auf den Verlaufspfad zu.

Durch die Verwendung wenigstens einer Schwingung bei der Ausgestaltung des Texturierungspfades lassen sich die erste Seitenfläche und/oder die zweite Seitenfläche der herzustellenden Wandung mit einer Texturierung versehen. Die Schwingung weist eine Wellenlänge und eine Amplitude auf. Insbesondere bei einer spiralförmigen Ausgestaltung des Verlaufspfades, bei der der Verlaufspfad in Windungen verläuft, können dadurch interessante Effekte erreicht werden. Die Wellenlänge kann so ausgebildet sein, dass sie ganzzahlig in die Länge einer Windung hineinpasst. In diesem Fall weicht der Druckpfad bei aufeinanderfolgenden Windungen identisch vom Verlaufspfad ab. Die Abweichungen erfolgen nach radial außen oder nach radial innen. An den Stellen, an denen der Druckpfad in einer Windung nach radial außen abweicht, weicht er auch in der folgenden Windung nach radial außen ab. Gleiches gilt für eine Abweichung nach radial innen. Es kommt also nicht zu einer Phasenverschiebung der Schwingung des Texturierungspfades von einer Windung auf die folgende Windung.

Dies ist anders, wenn die Wellenlänge der Schwingung nicht so ausgebildet ist, dass sie ganzzahlig in die Länge der Windung hineinpasst. Dann kommt es bei aufeinanderfolgenden Windungen zu Phasenverschiebungen, wodurch unterschiedliche Effekte und Gestaltungen der Textur und Struktur auf der ersten Seitenfläche und/oder der zweiten Seitenfläche der herzustellenden Wandungen erreicht werden können.

Vorzugsweise ist die Wellenlänge größer als ein Durchmesser der Einbringöffnung der Einbringnadel, durch die das Versteifungsmaterial in das Stützmaterial eingebracht wird und/oder größer als die Wandstärke der Wandung. Bevorzugt ist die Wellenlänge mehr als drei Mal, besonders bevorzugt mehr als vier Mal so groß. Dies steht im Gegensatz zu aus dem FDM-Druck (FDM: Fused Deposition Modelling, deutsch: Schmelzschichtung) bekannten Verfahren, bei denen eine hohe Wandstärke dadurch gebildet wird, dass eine Drucknadel entlang eines Druckpfades geführt wird, der möglichst enge Schlangenlinien aufweist. Dadurch wird eine Wandstärke herstellbar, die deutlich größer ist, als die Öffnung der Drucknadel. Es soll eine Struktur an einer Seitenfläche der so hergestellten Wandung vermieden werden, weshalb möglichst enge Schlangenlinien verwendet werden.

Vorzugsweise variiert die Wellenlänge und/oder die Amplitude wenigstens einer Schwingung des Texturierungspfades im Verlauf des Texturierungspfades. Wird die Wellenlänge im Verlauf des Texturierungspfades das variiert, hat dies zur Folge, dass die auf der ersten Seitenfläche und/oder der zweiten Seitenfläche erzeugte Struktur oder Textur sich verändert und auch die oben genannte Phasenverschiebung bei einem spiralförmigen Verlauf des Druckpfades variiert. Wird die Amplitude über den Verlauf des Texturierungspfad das variiert, hat dies zur Folge, dass die Tiefe der in der ersten Seitenfläche und/oder der zweiten Seitenfläche erzeugten Struktur oder Textur variiert.

Vorzugsweise weist der Texturierungspfad eine Überlagerung mehrerer Schwingungen auf oder besteht aus einer solchen Überlagerung. Jeder einzelne der so überlagerten Schwingungen kann eine Sinusschwingung, eine Dreiecksschwingung oder eine Rechteckschwingung sein. Natürlich sind auch andere Schwingungsarten möglich. Die einzelnen Schwingungen, die für den Texturierungspfad überlagert werden, weisen vorteilhafterweise unterschiedliche Wellenlängen und/oder unterschiedliche Amplituden auf.

In einer bevorzugten Ausgestaltung entspricht die Amplitude wenigstens einer Schwingung, vorzugsweise aller Schwingungen, des Texturierungspfades maximal der Wandstärke, vorzugsweise maximal 75 % der Wandstärke, bevorzugt maximal 50 %, besonders bevorzugt maximal 15 % der Wandstärke. Die Wahl einer größeren Amplitude ist insbesondere aber nicht nur dann sinnvoll, wenn eine größere Wandstärke erreicht werden soll, die Wandung des Objektes also in einem räumlich begrenzten Bereich verdickt werden soll.

Die Erfindung löst die gestellte Aufgabe zudem durch ein Verfahren zum Erstellen eines Druckpfades für ein hier beschriebenes Verfahren, dass sich durch folgende Schritte auszeichnet:
- Bereitstellen von Objektdaten eines 3-dimensionalen Objektes, die Informationen über den Wandungsverlauf einer Wandung des Objektes enthalten,
- Bereitstellen von Texturierungsinformationen, die Informationen über eine gewünschte Texturierung der ersten Seitenfläche und/oder der zweiten Seitenfläche der Wandung enthalten,
- Ermitteln eines Verlaufspfades aus den Objektdaten und eines Texturierungspfades aus den Texturierungsinformationen,
- Erstellen des Druckpfades durch überlagern des Verlaufspfades mit dem Texturierungspfad.

Der Verlaufspfad wird aus der makroskopischen Form und Geometrie des herzustellenden 3-dimensionalen Objektes ermittelt. Eine Textur oder Struktur, die in der ersten Seitenfläche oder der Seitenfläche vorhanden sein soll, hat hier keinen Einfluss. Für den Texturierungspfad werden die Texturierungsinformationen analysiert. Sie enthalten Informationen über die gewünschte Struktur oder Textur der ersten Seitenfläche und/oder der zweiten Seitenfläche. Diese Informationen sind jedoch in der Regel allein nicht ausreichend, um einen Texturierungspfad zu erzeugen. Vielmehr werden dazu in der Regel auch die Objektdaten verwendet, da der zu verwendenden Texturierungspfad auch davon abhängt, welche Geometrie und Form die herzustellende Wandung aufweist.

Vorzugsweise werden für die Ermittlung des Texturierungspfades lediglich die Texturierungsinformationen sowie Informationen über die Größe der ersten Seitenfläche und/oder der zweiten Seitenfläche verwendet. Besonders bevorzugt wird zur Ermittlung eines Texturierungspfades eine Fouriertransformation der Texturierungsinformationen, insbesondere der gewünschten Textur und Struktur, die geeignet parametrisiert ist, durchgeführt. So kann die Struktur und Textur in eine Überlagerung von Schwingungen, vorzugsweise Sinusschwingungen, umgerechnet werden, die dann als Texturierungspfad verwendet werden können.

Vorzugsweise enthält die gewünschte Texturierung ein Logo und/oder einen Schriftzug.

Die wenigstens eine Einbringnadel, durch die das Fertigungsmaterial in das Stützmaterial eingebracht wird, weist wenigstens eine Einbringöffnung auf, durch die das Fertigungsmaterial austritt. Diese Einbringöffnung ist in der Regel in Bewegungsrichtung der Einbringnadel nach hinten gerichtet. In einer bevorzugten Ausgestaltung weist diese Einbringöffnung jedoch in eine Richtung, die einen von 0° und von 180° verschiedenen Winkel mit der Bewegungsrichtung der Einbringnadel einschließt. Besonders bevorzugt weist die Einbringöffnung in eine Richtung, die einen Winkel von 90° mit der Bewegungsrichtung der Einbringnadel einschließt. Um dies zu erreichen, wird in einer besonders bevorzugten Ausgestaltung eine abgewickelte oder gebogene Einbringnadel verwendet. Auf diese Weise lässt sich eine Oberflächenstrukturierung erreichen, die nur auf einer Seitenfläche der Wandung ausgeprägt ist und auf der jeweils gegenüberliegenden Seitenfläche, in abgeschwächter Form oder gar nicht vorhanden ist. Diese wenig oder gar nicht strukturierte Seitenfläche ist vorzugsweise die der Einbringnadel zugewandte Seite. Die Einbringnadel glättet vorzugsweise beim Einbringen einer Lage des Fertigungsmaterials die zuvor eingebrachte darunterliegende Lage, wodurch die jeweilige Seitenfläche gänzlich ohne oder mit nur einer geringeren Strukturierung als die der Einbringnadel abgewandte Seitenfläche der Wandung ausgebildet wird.

Vorzugsweise wird die Wandung aus aneinander angeordneten Lagen des Fertigungsmaterials aufgebaut, wobei eine Phasenverschiebung einer Schwingung des Texturierungspfades zwischen benachbarten Lagen vorliegt, die vorzugsweise zwischen 160° und 200° beträgt.

In einem konkreten Ausführungsbeispiel wird ein Prothesenliner mittels des additiven Fertigungsverfahrens hergestellt, der über ein geschlossenes distales Ende, ein offenes proximales Ende und eine Längsrichtung verfügt, die sich vom distalen Ende zum proximalen Ende erstreckt. In einem Bereich zwischen dem distalen Ende und dem proximalen Ende wird die Wandung des Prothesenliners erzeugt, in dem die Einbringnadel einen spiralförmigen Druckpfad beschreibt. Auf diese Weise wird der Liner vom distalen Ende ausgehend Lage um Lage aufgebaut. Ab einer vorbestimmten Höhe, also einem vorbestimmten Abstand vom distalen Ende entlang der Längsrichtung des Liners wird der Druckpfad aus einem Verlaufspfad, der der Spirale entspricht, und einem Texturierungspfad gebildet. Gewählt wird für den Texturierungspfad beispielsweise eine Sinusschwingung mit einer Amplitude von 0,2 mm. Die Wandstärke der herzustellenden Wandungen beträgt im beschriebenen Beispiel 2 mm, der Lagenabstand, also der Versatz der Spirale nach einem Umlauf, beträgt beispielsweise 0,5 mm. Die Wellenlänge der Sinusschwingung wird so gewählt, dass sie nicht ganzzahlig in den Umfang der Spirale und damit des herzustellenden Liner hineinpasst. In diesem Ausführungsbeispiel passen 11,53 Wellenlängen in einen Umfang. Es entsteht ein Phasenversatz von etwa 190,8°. Wäre die Wellenlänge etwas größer gewählt, sodass genau 11,5 Wellenlängen in einen Umfang des Liners passen, ergäbe sich ein Phasenversatz von 180°. Es hat sich als vorteilhaft herausgestellt, wenn die Wellenlänge variiert wird. In einem konkreten Ausführungsbeispiel wird für eine vorgegebene Anzahl von Umläufen der Spirale eine Wellenlänge von U/11,53 gewählt, wobei U die Länge des Umfangs der Spirale ist. Mit dieser Wellenlänge werden beispielsweise 32 Umläufe der Spirale gedruckt. Danach wird eine andere Wellenlänge, beispielsweise U/11,47 gewählt, die für weitere 32 Umläufe der Spirale konstant gehalten wird. Auf diese Weise lassen sich pfeilartige Strukturen an der Außenseite, also einer Seitenwandung des Prothesenliners herstellen.

Mithilfe der beiliegenden Zeichnungen werden nachfolgend einige Ausführungsbeispiele der vorliegenden Erfindung nähere erläutert. Es zeigen
Figur 1 - die schematische Darstellung eines additiven Fertigungsverfahrens
Figur 2-3 - schematische Darstellungen von Verlaufspfad und Texturierungspfad,
Figur 4-5 - die schematische Darstellung unterschiedlicher 3-dimensionaler Objekte und
Figur 6a-6c - schematische Darstellungen unterschiedlicher Druckpfade.

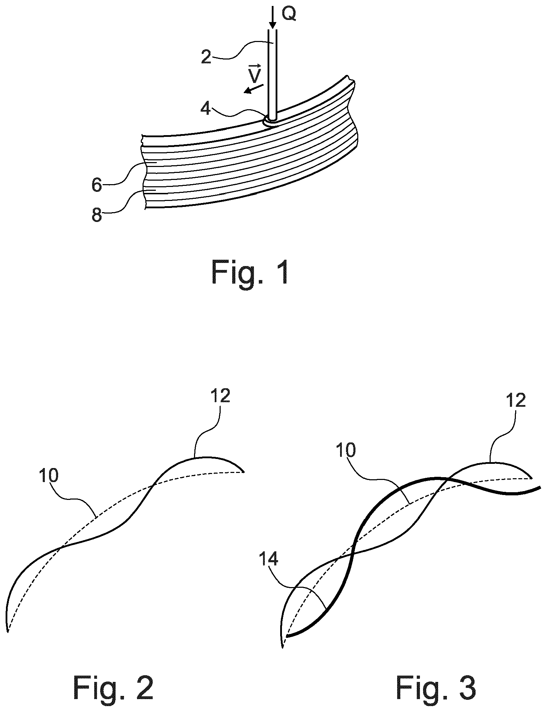

Figur 1 zeigt schematisch die Funktionsweise eines RLP-Verfahrens. Eine Einbringnadel 2 wird entlang eines Druckpfades, den Figur 1 nicht separat dargestellt ist, durch ein ebenfalls nicht dargestelltes Stützmaterial bewegt. Im in Figur 1 dargestellten Ausführungsbeispiel befindet sich am unteren Ende der Einbringnadel 2 eine Einbringöffnung 4, durch die Fertigungsmaterial 6 austritt. Man erkennt, dass dieses in Lagen aufeinander aufgebracht wird und so eine Wandung 8 bildet. Diese Wandung 8 verfügt in Figur 1 nicht über eine Struktur oder eine Textur auf einer der Seitenflächen. Der Druckpfad, entlang dessen die Einbringnadel 2 durch das Stützmaterial bewegt wird deckt sich mit dem Verlauf der Wandung 8 und besteht daher nur aus einem Verlaufspfad.

Figur 2 zeigt einen solchen Verlaufspfad 10, der als gepunktete Linie dargestellt ist. Der Verlauf dieses Verlaufspfades 10 entspricht dem Verlauf der herzustellenden Wandung 8. Dem Verlaufspfad 10 wird ein Texturierungspfad überlagert, dem gezeigten Ausführungsbeispiel eine Sinusschwingung ist. Die Überlagerung des Verlaufspfades 10 mit dem Texturierungspfad liefert den Druckpfad 12, der als durchgezogene Linie dargestellt ist. Man erkennt, dass der Druckpfad 12 alternierend nach links und rechts vom Verlaufspfad 10 abweicht. Der maximale Abstand zwischen dem Druckpfad 12 und dem Verlaufspfad 10 entspricht der Amplitude der Sinusschwingung, die den Texturierungspfad bildet. Der Abstand zwischen benachbarten Schnittstellen zwischen dem Druckpfad 12 und dem Verlaufspfad 10 entspricht der halben Wellenlänge der Sinusschwingung, die den Texturierungspfad bildet.

Wie in Figur 1 dargestellt ist, wird die Wandung 8 in der Regel durch mehrere Lagen des Fertigungsmaterials 6 aufgebaut. Wird beispielsweise ein Prothesenliner hergestellt, entspricht der Verlaufspfad einem spiralförmigen Weg. Nach jeweils einer Umdrehung wird daher bei diesem Verlaufspfad eine Lage des Fertigungsmaterials eine bereits vorhandene Lage des Fertigungsmaterials aufgetragen. Diese Situation ist in Figur 3 dargestellt. Man erkennt als gepunktete Linie wieder den Verlaufspfad 10. Auch ein Abschnitt des Druckpfades 12 ist wie in Figur 2 dargestellt. Zusätzlich ist ein weiterer Abschnitt 14 des Druckpfades 12 dargestellt, der dem Druckpfad 12 bei einem späteren Umlauf entspricht. Die beiden Abschnitte des Druckpfades 12 entsprechend daher den Positionen, an denen bei aufeinanderfolgenden Umläufen des Druckpfades aus der Einbringnadel 2 Fertigungsmaterial eingebracht wird. Man erkennt, dass zwischen den beiden Abschnitten des Druckpfades eine Phasenverschiebung von nahezu 180° vorliegt.

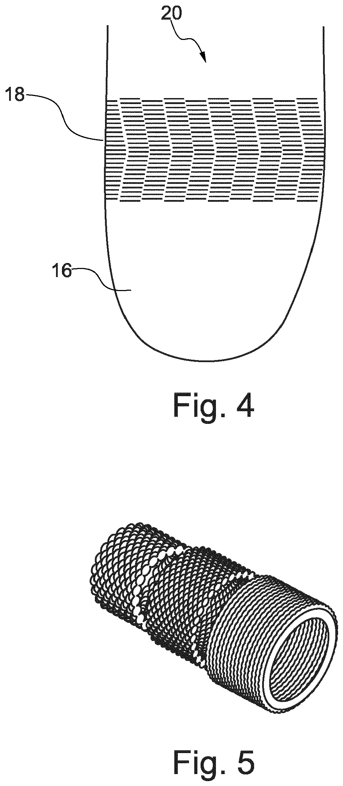

Figur 4 zeigt einen Prothesenliner 16, dessen Grundkörper in einem RLP Verfahren hergestellt wurde. Man erkennt einen strukturierten Bereich 18, der mit einem Verfahren gemäß einem Ausführungsbeispiel der vorliegenden Erfindung hergestellt wurde. Die dem Verlaufspfad 10 überlagerte Sinusschwingung führt, wie in den Figuren 2 und 3 zu erkennen ist, zu einer Struktur an den Seitenflächen der hergestellten Wandung. Diese ist durch das Strichmuster 20 dargestellt. Jeder einzelne Strich entspricht einem Bauch der Sinusschwingung, der bei der Wandung zu einer nach außen hervorstehenden Wölbung führt. Zwischen zwei benachbarten Wölbungen entsteht eine zurückspringende Wölbung. Durch die Phasenverschiebung ergibt sich das gezeigte Bild. Im unteren Bereich verschieben sich die Knotenpunkte der als Texturierungspfad verwendeten Sinuskurve von einer Lage zur benachbarten Lage nach rechts. Je nach Richtung des Druckpfades bedeutet dies, dass die Phasenverschiebung zwischen zwei benachbarten Lagen, wie in Figur 3 dargestellt, etwas größer oder etwas kleiner als 180° ist. Im oberen Bereich des Strichmusters 20 dreht sich die Struktur um. Die Knotenpunkte der als Texturierungspfad verwendeten Sinuskurve verschieben sich von Lage zu Lage nach links. Die Phasenverschiebung zwischen benachbarten Lagen ist nun je nach Richtung des Druckpfades etwas kleiner oder etwas größer als 180°. Auf diese Weise lassen sich unterschiedliche Strukturen in die Seitenflächen der herzustellenden Gegenstände einbringen. Figur 5 zeigt drei gedruckte Objekte, bei denen als Texturierungspfad eine Sinuskurve verwendet wurde, deren Amplitude von Objekt zu Objekt rechts nach links zunimmt.

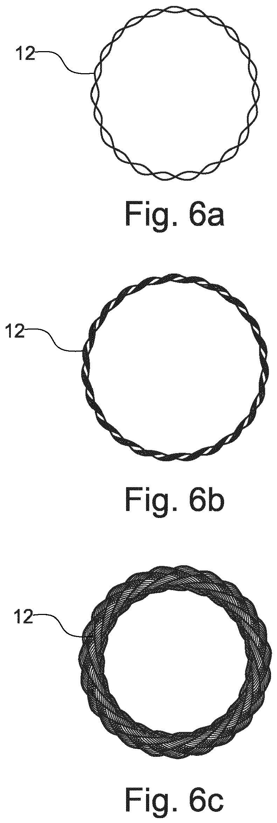

Figur 6a zeigt eine Draufsicht auf einen Druckpfad 12, der als spiralförmiger Druckpfad 12 ausgebildet ist. Gezeigt sind zwei übereinanderliegende Lagen, die in einer Richtung senkrecht zur Zeichenebene aufeinander angeordnet sind. Man erkennt, dass der Texturierungspfad eine Sinuskurve ist, wobei zwischen den benachbarten Lagen eine Phasenverschiebung von etwa 180° liegt. In Figur 6b sind weitere Umläufe dieses Druckpfades 12 dargestellt. Man erkennt hier, dass die Phasenverschiebung nicht exakt 180° beträgt. Geht man davon aus, dass der Druckpfad im Uhrzeigersinn durchlaufen wird, ist die Phasenverschiebung etwas größer als 180°. In Figur 6c ist der Druckpfad mit noch mehr Umläufen dargestellt. Man erkennt einerseits, dass der Radius der herzustellenden Wandung und damit der Radius des Verlaufspfades zunimmt. Zudem hat sich nach einer vorbestimmten Anzahl von Umläufen die Wellenlänge der als Texturierungspfad verwendeten Sinuskurve verändert, sodass die Phasenverschiebung nun etwas kleiner als 180° ist.

### Bezugszeichenliste

2 Einbringnadel
4 Einbringöffnung
6 Fertigungsmaterial
8 Wandung
10 Verlaufspfad
12 Texturierungspfad
14 Abschnitt
16 Liner
18 strukturierter Bereich
20 Strichmuster

## Patentansprüche

1. Verfahren zum Herstellen wenigstens einer Wandung eines 3-dimensionalen Objektes mittels eines additiven Fertigungsverfahrens, bei dem aus wenigstens einer Einbringöffnung einer Einbringnadel wenigstens ein Fertigungsmaterial in einem fließfähigen Zustand in ein Stützmaterial eingebracht wird und danach aushärtet, wobei die Wandung sich entlang eines Wandungsverlaufes erstreckt und eine erste Seitenfläche und eine gegenüberliegende zweite Seitenfläche aufweist, wobei die Einbringnadel entlang eines Druckpfades durch das Stützmaterial bewegt wird,
**dadurch gekennzeichnet, dass** der Druckpfad einem Verlaufspfad entlang des Wandungsverlaufes entspricht, dem ein Texturierungspfad überlagert ist.

2. Verfahren nach Anspruch 1, **dadurch gekennzeichnet, dass** sich der Verlaufspfad in der Mitte zwischen der ersten Seitenfläche und der zweiten Seitenfläche erstreckt.

3. Verfahren nach Anspruch 1 oder 2, **dadurch gekennzeichnet, dass** der Texturierungspfad eine Schwingung, vorzugsweise eine Sinusschwingung, eine Dreiecksschwingung oder eine Rechteckschwingung, beinhaltet oder aus einer solchen Schwingung besteht, die eine Wellenlänge und eine Amplitude aufweist.

4. Verfahren nach Anspruch 3, **dadurch gekennzeichnet, dass** die Wellenlänge und/oder die Amplitude im Verlauf des Texturierungspfades variiert.

5. Verfahren nach Anspruch 3 oder 4, **dadurch gekennzeichnet, dass** der Texturierungspfad eine Überlagerung mehrerer Schwingungen beinhaltet.

6. Verfahren nach einem der Ansprüche 3 bis 5, **dadurch gekennzeichnet, dass** die Amplitude maximal der Wandstärke, vorzugsweise maximal 75% der Wandstärke, besonders bevorzugt maximal 50 % der Wandstärke der Wandung entspricht.

7. Verfahren zum Erstellen eines Druckpfades für ein Verfahren nach einem der vorstehenden Ansprüche, **gekennzeichnet durch** folgende Schritte:
- Bereitstellen von Objektdaten eines 3-dimensionalen Objektes, die Informationen über den Wandungsverlauf einer Wandung des Objektes enthalten,
- Bereitstellen von Texturierungsinformationen, die Informationen über eine gewünschte Texturierung der ersten Seitenfläche und/oder der zweiten Seitenfläche der Wandung enthalten,
- Ermitteln eines Verlaufspfades unter Verwendung der Objektdaten und eines Texturierungspfades unter Verwendung der Texturierungsinformationen,
- Erstellen des Druckpfades durch Überlagern des Verlaufspfades mit dem Texturierungspfad.

8. Verfahren nach Anspruch 7, **dadurch gekennzeichnet, dass** die gewünschte Texturierung ein Logo und/oder einen Schriftzug enthält.

9. Verfahren nach einem der Ansprüche 3 bis 8, **dadurch gekennzeichnet, dass** die Wandung aus aneinander angeordneten Lagen des Fertigungsmaterial aufgebaut wird und eine Phasenverschiebung einer Schwingung des Texturierungspfades zwischen benachbarten Lagen vorliegt, die vorzugsweise zwischen 160° und 200° beträgt.
